# FASCICULE DE BREVET EUROPEEN

(11) **EP 4 419 421 B1**
(45) Date de publication et mention de la délivrance du brevet: **03.06.2026**
(21) Numéro de dépôt: 22803006.0
(22) Date de dépôt: 19.10.2022
(51) Int. Cl.: B64D 11/00, B64D 11/06

(54) **DISPOSITIF DE MAINTIEN AMOVIBLE D'UN RIDEAU D'ISOLATION POUR LA CRÉATION D'UN ESPACE DE REPOS À L'INTÉRIEUR D'UNE CABINE D'AÉRONEF**
ABNEHMBARE HALTEVORRICHTUNG EINES ISOLIERVORHANGS ZUR ERZEUGUNG EINES RUHERAUMS IN EINER FLUGZEUGKABINE
REMOVABLE DEVICE FOR HOLDING AN ISOLATING CURTAIN FOR THE CREATION OF A REST SPACE INSIDE AN AIRCRAFT CABIN

(30) Priorité: 20.10.2021 FR 2111120
(43) Date de publication de la demande: 28.08.2024
(73) Titulaire: Safran Seats, 78370 Plaisir (FR)
(72) Inventeur: GLAIN, Arthur K., 77550 Moissy-Cramayel (FR)
(74) Mandataire: Marconnet, Sébastien
(86) Numéro de dépôt international: PCT/EP2022/079084
(87) Numéro de publication internationale: WO 2023/066991

(56) Documents cités:
- EP-A1- 3 643 615
- WO-A1-2019/224591
- US-A1- 2015 053 817
- US-B2- 9 027 880

## Description

La présente invention porte sur un dispositif de maintien amovible d'un rideau d'isolation pour la création d'un espace de repos à l'intérieur d'une cabine d'aéronef, en particulier une cabine d'avion.

On connaît des dispositifs permettant de créer un espace de repos autour d'un siège de l'avion, notamment un siège de la classe "Affaires" (ou "Business Class" en anglais), afin de permettre aux membres de l'équipage de se reposer au sein de la cabine d'avion parmi les passagers.

Les solutions actuellement employées consistent à tendre des rideaux autour d'un siège de classe Affaires. Ces derniers protègent du vis-à-vis avec les autres passagers durant les phases de sommeil. Ces rideaux protègent également de la lumière et de la promiscuité avec les autres passagers pour offrir davantage de confort et d'intimité aux membres d'équipage.

Ces rideaux posent toutefois des problèmes esthétiques ainsi que des problèmes d'intégration au sein de la cabine d'avion. En effet, les rideaux nécessitent l'installation de modules encombrants et disgracieux, tels que des rails apparents qui dégradent la qualité perçue en cabine par les passagers. L'ajout de rails externes peut également poser des problèmes de sécurité en cas de crash.

Par ailleurs, l'utilité de ces rideaux n'est pas clairement communiquée aux passagers. Cela peut amener les passagers à s'interroger sur leur fonction dans la cabine. Les passagers peuvent notamment se demander si ces rideaux sont utilisés pour cacher un siège cassé ou former une tente médicale. La curiosité de certains passagers pouvant être tentés de regarder derrière les rideaux est susceptible de déranger le repos des membres d'équipage. Il peut en résulter des situations gênantes autant pour les passagers que pour les membres d'équipage.

Ainsi, les systèmes à rideaux connus ne permettent pas aux membres d'équipage de dormir de manière confortable et isolée des autres passagers au sein de la cabine. Ces systèmes ne répondent pas non plus aux critères qualitatifs en termes de finition et d'esthétisme pour une cabine de type classe Affaires.

Le document EP3643615 décrit une unité de siège d'aéronef formée par une zone de siège et un rideau de séparation réglable entre un état ouvert et un état fermé. Le rideau de séparation est destiné à séparer la zone de siège par rapport au reste d'une cabine, en particulier par rapport au couloir de circulation. Le rideau de séparation est déployé verticalement depuis un compartiment de stockage situé en partie supérieure d'une cabine d'aéronef.

Le document US9027880 décrit un dispositif permettant de créer une zone délimitée individuellement d'une cabine passagers dans un moyen de transport pour au moins un siège passager comprenant un élément de cabine modulaire fixé de à des rails de guidage fixes du siège passager par l'intermédiaire d'éléments de fixation à démontage rapide. A cet élément de cabine est associé un store brise-vue extensible qui forme un élément de séparation flexible.

L'invention vise à remédier efficacement aux inconvénients précités en proposant un ensemble pour une cabine d'aéronef, selon la revendication 1.

L'invention permet ainsi au rideau d'isolation de s'intégrer harmonieusement dans une cabine d'avion sans dégrader l'aspect esthétique ou la qualité perçue d'une cabine de type classe affaires. En effet, l'invention ne nécessite pas l'ajout de modules encombrants et visuellement disgracieux en cabine, tel que la pose de rails apparents. En outre, lorsque la solution n'est pas déployée, le rideau d'isolation peut être discrètement rangé dans le compartiment à bagages sans gêner les passagers. L'invention permet également d'améliorer la séparation entre l'espace de repos réservé au personnel de bord et le reste de la cabine. Les conditions de repos du personnel de bord sont donc également améliorées. L'invention présente également un caractère économique, dans la mesure où elle est simple à produire et n'induit quasiment aucune modification de la cabine.

Selon une réalisation de l'invention, au moins un dispositif secondaire de maintien amovible du rideau d'isolation est destiné à positionner et fixer une portion du rideau d'isolation en contre-bas du compartiment à bagages.

Selon une réalisation de l'invention, le dispositif secondaire de maintien amovible comporte des aimants destinés à coopérer avec des éléments métalliques ou magnétiques intégrés dans le rideau d'isolation.

Selon une réalisation de l'invention, le dispositif secondaire de maintien amovible comporte des attaches auto-agrippantes destinées à coopérer avec des attaches auto-agrippantes de forme correspondante ménagées dans le rideau d'isolation.

Selon une réalisation de l'invention, le dispositif secondaire de maintien amovible comporte un séparateur de cabine muni d'au moins un moyen d'accroche à au moins un rabat latéral du rideau d'isolation.

Selon une réalisation de l'invention, le séparateur de cabine pourra être équipé d'un système d'affichage lumineux, notamment à diodes électroluminescente (DEL).

Selon une réalisation de l'invention, le séparateur de cabine comporte une face interne tournée vers l'intérieur de l'espace clos et munie d'un interrupteur d'activation du système d'affichage lumineux.

L'invention a également pour objet une cabine d'aéronef comportant l'ensemble tel que défini précédemment.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en perspective d'une partie d'une cabine d'avion dans laquelle un rideau d'isolation rapporté selon la présente invention est destiné à être déployé pour la création d'un espace clos de repos;
[Fig. 2a] [Fig. 2b] Les figures 2a et 2b illustrent la mise en place d'un rideau d'isolation selon l'invention muni d'une barre lestée destinée à être disposée à l'intérieur d'un volume interne d'un compartiment à bagages pour la création d'un espace clos de repos;
[Fig. 3a] [Fig. 3b] Les figures 3a et 3b illustrent le déploiement de crochets mobiles situés à l'intérieur du compartiment à bagages pour la mise en place d'un rideau d'isolation selon l'invention;
[Fig. 4] La figure 4 illustre la mise en place d'un rideau d'isolation selon l'invention sur un dispositif à crochets fixe disposé à l'intérieur d'un compartiment à bagages;
[Fig. 5a] La figure 5a montre une extension rapportée selon l'invention munie d'un dispositif secondaire de maintien amovible du rideau d'isolation;
[Fig. 5b] La figure 5b illustre la mise en place d'un rideau d'isolation sur l'extension rapportée de la figure 5a;
[Fig. 6] La figure 6 illustre la mise en place d'un rideau d'isolation selon l'invention sur un dispositif secondaire de maintien amovible ménagé sur une paroi de la cabine d'avion;
[Fig. 7] La figure 7 est une vue en perspective d'un espace clos de repos créé suite à l'installation d'un rideau d'isolation selon la présente invention;
[Fig. 8] La figure 8 est une vue en perspective d'un mode de réalisation dans lequel le rideau d'isolation est maintenu d'une part au niveau du compartiment à bagages et d'autre part en contre-bas au niveau d'un séparateur de cabine;
[Fig. 9] La figure 9 est une vue en perspective d'un séparateur de cabine muni d'un moyen d'accroche à un rideau d'isolation;
[Fig. 10] La figure 10 est une vue en perspective illustrant l'accrochage par un membre d'équipage d'un rideau d'isolation à un séparateur de cabine;
[Fig. 11] La figure 11 est une vue illustrant d'un côté l'actionnement d'un interrupteur d'un membre d'équipage et d'un autre côté l'affichage lumineux du séparateur de cabine engendré par cet actionnement de l'interrupteur;
[Fig. 12] La figure 12 illustre les différentes étapes de pliage et de rangement d'un rideau d'isolation selon la présente invention.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

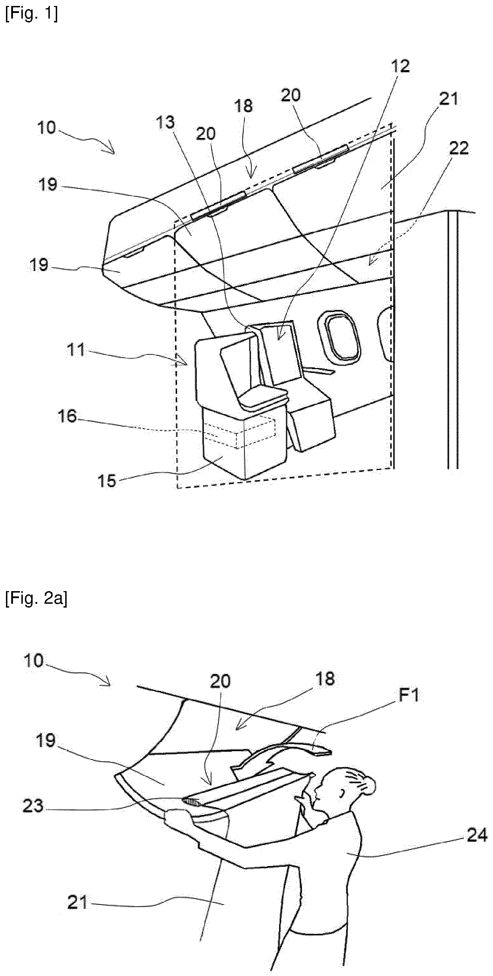

La figure 1 montre une cabine d'avion 10 comportant une pluralité d'unités de sièges 11 par exemple de type classe affaires. Classiquement, la cabine de d'avion comporte plusieurs rangées d'unités de sièges 11 situées les unes derrière les autres. Une seule unité de siège 11 a toutefois été représentée sur la figure afin de faciliter la compréhension de l'invention. Une unité de siège 11 comporte un siège 12 et une coque d'intimité 13 s'étendant au moins en partie autour du siège 12 pour isoler le passager de l'environnement extérieur.

Le siège 12 pourra offrir à un passager différentes positions de confort, d'une position "assise" jusqu'à une position "lit", dans laquelle le siège 12 définit un plan de couchage sensiblement horizontal pour que le passager puisse s'allonger. Des positions intermédiaires de confort sont aussi proposées, telles que la position "relax" dans laquelle un dossier du siège 12 est fortement incliné. Généralement, ces positions intermédiaires sont obtenues par l'inclinaison du dossier pivotant autour d'un axe horizontal et perpendiculaire à un axe d'extension du siège 12. Le passager peut rester sur le siège 12 lors de transitions entre les différentes positions.

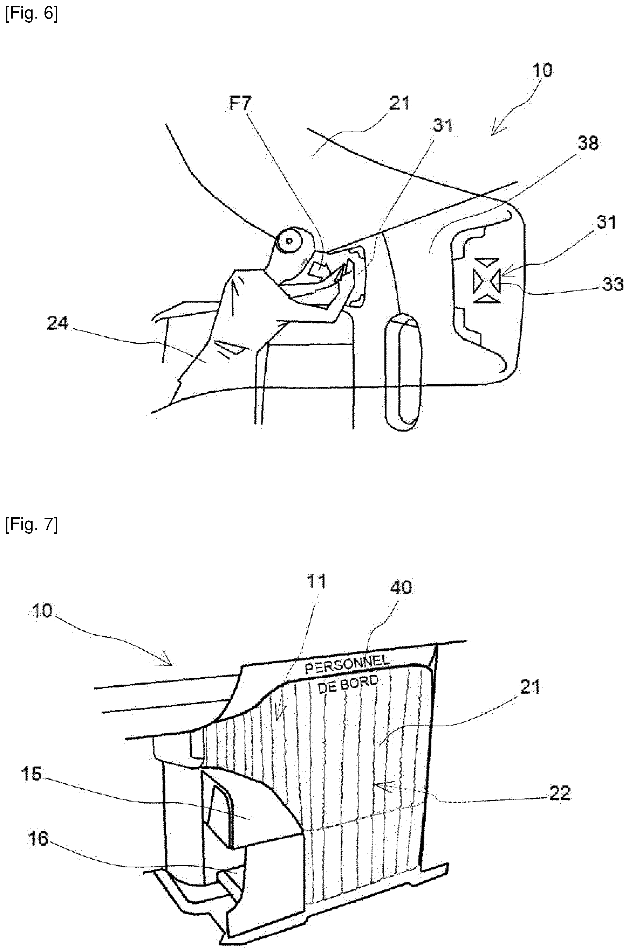

L'unité de siège 11 pourra également comporter un meuble latéral 15 ayant une face supérieure sur lequel le passager pourra poser des objets. Le meuble latéral 15 pourra être muni d'un logement de pieds 16 visible également en figure 7 destiné à recevoir les pieds d'un passager d'un siège arrière correspondant, notamment lorsque le siège arrière est en position "lit". Ainsi, l'ouverture du logement de pieds 16 est dirigée vers le siège 12 situé immédiatement derrière le meuble de l'unité de siège 11.

Par ailleurs, un compartiment à bagages 18, est situé en partie supérieure de la cabine d'avion 10. Le compartiment à bagages 18 comporte un tiroir 19 mobile entre une position ouverte permettant au passager d'accéder au volume interne du compartiment 18 pour pouvoir disposer des objets et une position fermée dans laquelle le tiroir 19 ferme le volume interne du compartiment 18 afin d'éviter toute chute d'objet lors du vol.

Afin de créer un espace clos 22 autour de l'unité de siège, on utilise un dispositif de maintien amovible 20 d'un rideau d'isolation 21. Le rideau d'isolation 21 est rapporté par rapport au compartiment à bagages 18.

Le dispositif de maintien amovible 20 est configuré de façon à maintenir le rideau d'isolation 21 dans un état suspendu au compartiment de façon à délimiter au moins en partie un espace clos de repos 22 autour de l'unité de siège 11, tel que montré sur la figure 7. A l'état suspendu, le rideau d'isolation 21 s'étend de préférence verticalement depuis le compartiment 18.

Le dispositif de maintien amovible 20 est également configuré de façon à autoriser une désolidarisation manuelle du rideau d'isolation 21 par rapport au compartiment 18 sans l'aide d'outil lorsqu'un membre d'équipage 24 souhaite ranger le rideau d'isolation 21. Une fois décroché, le rideau d'isolation 21 pourra être rangé à l'intérieur d'un espace dédié, notamment à l'intérieur de l'espace interne du compartiment à bagages 18.

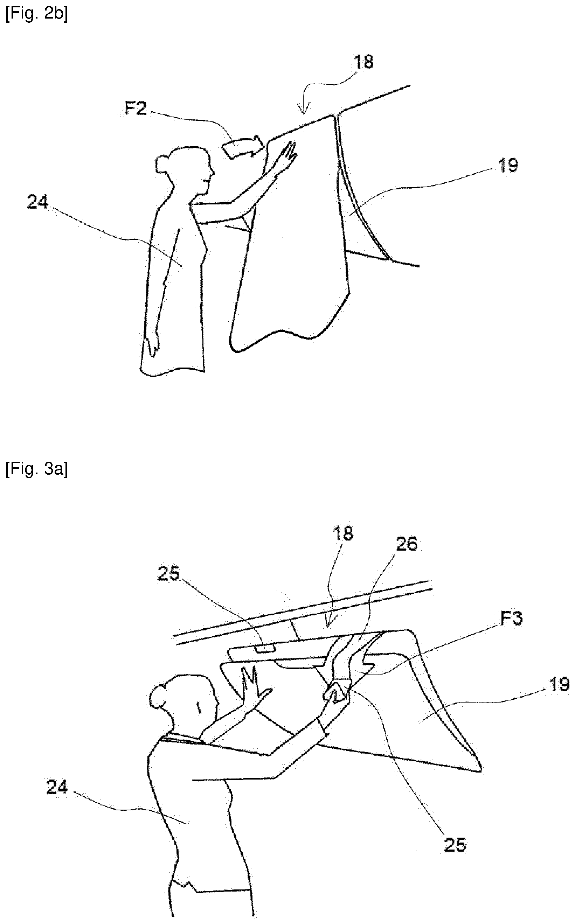

Dans le mode de réalisation des figures 2a et 2b, le dispositif de maintien amovible 20 du rideau d'isolation 21 comporte une barre lestée 23 s'étendant au moins en partie suivant un bord supérieur du rideau d'isolation 21. La barre lestée 23 pourra par exemple être réalisée dans un matériau métallique ou plastique rigide.

La barre lestée 23 pourra être placée par un membre d'équipage 24 à l'intérieur d'un volume interne du compartiment 18 délimité au moins en partie par le tiroir 19 en position ouverte (cf. flèche F1). Le membre d'équipage 24 pourra ensuite fermer le tiroir 19 en effectuant un mouvement en direction du compartiment 18 suivant la flèche F2.

Une fois le tiroir 19 en position fermée, le rideau d'isolation 21 est alors pincé entre le tiroir 19 et une partie fixe du compartiment à bagages 18 de manière à être maintenu suspendu au compartiment 18. Un tel dispositif de maintien présente l'avantage de ne pas nécessiter l'emploi de moyens de fixation spécifiques dédiés qui auraient dû être installés au préalable dans le compartiment à bagages 18.

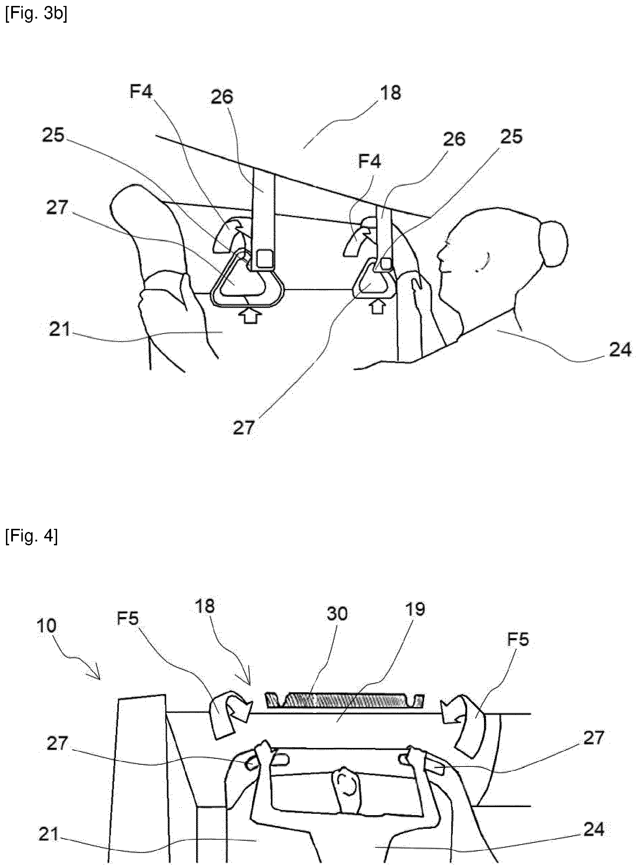

Dans le mode de réalisation des figures 3a et 3b, le dispositif de maintien amovible 20 du rideau d'isolation 21 comporte au moins un crochet mobile 25 entre une position stockée dans laquelle le crochet 25 est entièrement disposé à l'intérieur d'un volume interne du compartiment 18 de façon à ne pas perturber un aspect visuel de la cabine d'avion 10 et une position déployée dans laquelle le crochet 25 dépasse au moins en partie du compartiment 18 pour permettre l'accrochage du rideau d'isolation 21 audit crochet 25.

A cet effet, le crochet 25 pourra être relié à une extrémité d'une lanière 26 laquelle est fixée par son autre extrémité à l'intérieur du compartiment à bagages 18. Lorsque le crochet 25 est en position stockée, le crochet 25 et la lanière 26 sont disposés à l'intérieur du compartiment à bagages 18. Lorsque le crochet 25 est en position déployée, la lanière 26 pourra s'étendre entre le tiroir 19 fermé et une portion fixe du compartiment 18. Pour faire passer un crochet 25 de la position stockée à la position déployée, un membre d'équipage 24 pourra le tirer vers lui suivant la flèche F3. Un enrouleur pourra être utilisé en combinaison avec la lanière 26 pour faire repasser automatiquement le crochet 25 en position stockée lorsque le rideau d'isolation 21 est retiré.

Dans l'exemple représenté, on prévoit deux crochets 25 issus du compartiment à bagages 18 destinés à coopérer avec des zones d'accrochage 27 du rideau d'isolation 21. Sur la figure 3b, le membre d'équipage 24 fait coopérer les zones d'accrochage 27 avec les crochets 25 via un mouvement du rideau 21 suivant les flèches F4. Les zones d'accrochage 27 pourront notamment consister en des ouvertures traversantes autorisant le passage d'un crochet 25 correspondant. Un crochet 25 pourra par exemple présenter une forme en L, en U, ou toute autre forme adaptée à l'application permettant de suspendre le rideau d'isolation 21. En variante, le crochet 25 pourra prendre la forme d'un mousqueton c'est-à-dire un anneau muni d'un système manuel d'ouverture rapide. Bien entendu, il est possible de prévoir un nombre quelconque de crochets 25 pour assurer l'accrochage du rideau d'isolation 21.

Les crochets 25 pourront présenter des couleurs correspondant à des couleurs de zones d'accrochage 27 correspondantes du rideau d'isolation 21. Cela permet de faciliter l'installation du rideau d'isolation 21 en la rendant plus intuitive.

Dans le mode de réalisation de la figure 4, le dispositif de maintien amovible 20 comporte un dispositif à crochets 30 disposé à demeure à l'intérieur du compartiment à bagages 18. Le dispositif 30 pourra comporter des crochets fixes situés à l'intérieur du compartiment à bagages 18. Un membre d'équipage 24 pourra ainsi faire coopérer des zones d'accrochage 27 du rideau d'isolation 21 avec des crochets d'extrémité du dispositif 30 par un mouvement de rabat du rideau d'isolation 21 suivant les flèches F5. Ce dispositif à crochets 30 pourra être accessible lorsque le tiroir 19 du compartiment à bagages 18 est en position ouverte.

Comme précédemment, les crochets du dispositif 30 pourront comporter des couleurs différentes pour faciliter leur mise en correspondance avec des zones d'accrochage 27 du rideau d'isolation 21.

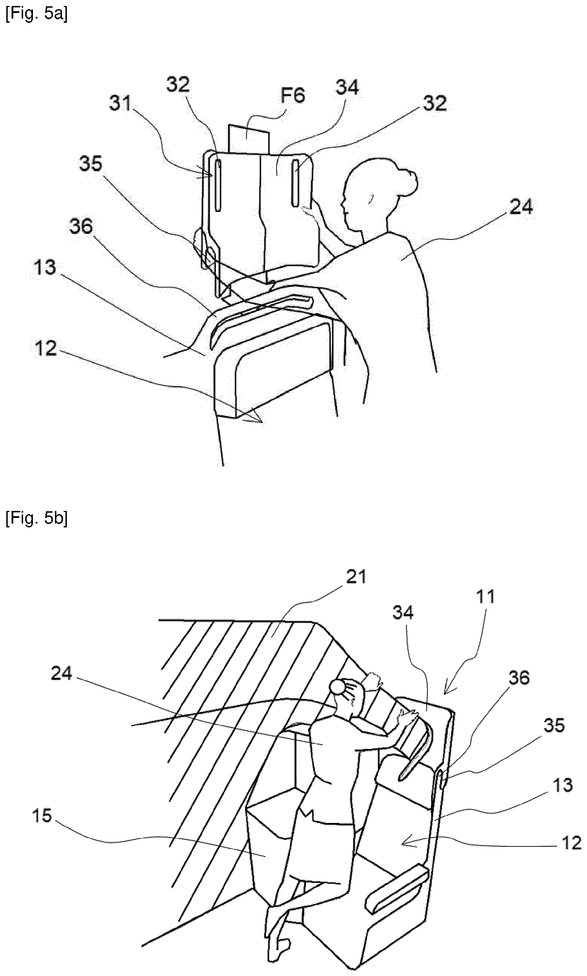

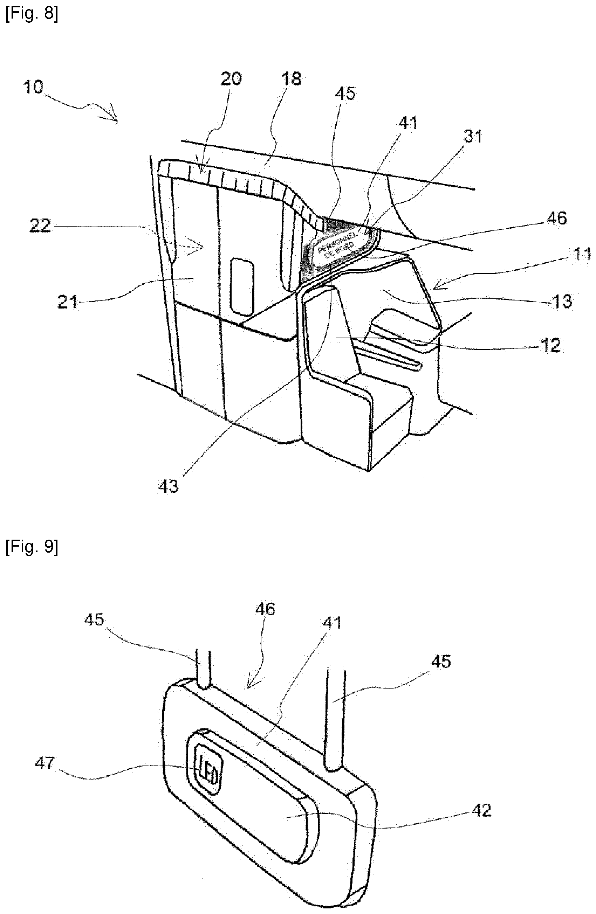

Par ailleurs, comme cela est illustré par les figures 5a, 5b, et 6, on prévoit de préférence au moins un dispositif secondaire de maintien amovible 31 du rideau d'isolation 21. Ce dispositif secondaire de maintien amovible 31 est destiné à positionner et fixer une portion du rideau d'isolation 21 en contre-bas du compartiment 18, notamment au niveau de l'unité de siège 11 et/ou d'une paroi de la cabine d'avion 10 et/ou d'un séparateur de cabine 41 (cf. figure 8). Ainsi, pour optimiser son maintien, le rideau d'isolation 21 est accroché d'une part au niveau du compartiment à bagages 18 et d'autre part dans une zone située en dessous du compartiment à bagages 18 au niveau de l'unité de siège 11 et/ou du fuselage et/ou du séparateur de cabine 41.

Le dispositif secondaire de maintien amovible 31 pourra comporter des aimants 32 destinés à coopérer avec des éléments métalliques ou magnétiques intégrés dans le rideau d'isolation 21 (cf. figure 5a). Alternativement, le dispositif secondaire de maintien amovible 31 pourra comporter des attaches auto-agrippantes 33 destinées à coopérer avec des attaches auto-agrippantes de forme correspondante ménagées dans le rideau d'isolation 21 (cf. figure 6). Les attaches auto-agrippantes 33 sont constituées par exemple par des bandes de tissus munies d'une pluralité de boucles ou de crochets de formes complémentaires. Les bandes utilisées pourront par exemple être des bandes de type Velcro (Marque déposée).

Dans le mode de réalisation des figures 5a et 5b, le dispositif secondaire de maintien amovible 31 est ménagé sur une extension rapportée 34 destinée à coopérer avec la coque d'intimité 13 de l'unité de siège 11, en particulier un bord supérieur de la coque d'intimité 13.

A cet effet, l'extension rapportée 34 pourra comporter une gorge 35 qu'un membre d'équipage 24 pourra faire coopérer avec une portion d'un bord supérieur 36 de la coque 13. A cet effet, comme on peut le voir sur la figure 5a, l'extension rapportée 34 pourra être mise en place sur le siège 12 par un simple mouvement vertical suivant la flèche F6 de façon que le bord supérieur 36 de la coque d'intimité 13 s'engage à l'intérieur de la gorge 35 réalisée en partie basse de l'extension rapportée 34.

Une fois l'extension 34 mise en place, un membre d'équipage 24 pourra fixer une portion du rideau d'isolation 21 sur la face de l'extension rapportée 34 comportant le dispositif de maintien du rideau d'isolation 21, tel que montré sur la figure 5b. La face de l'extension rapportée 34 portant le dispositif 21 s'étend au-dessus de la coque d'intimité 13. L'extension rapportée 34 pourra comporter des aimants 32 ou des attaches auto-agrippantes 33.

Dans le mode de réalisation de la figure 6, le dispositif secondaire de maintien amovible 31 est ménagé sur une paroi 38 de la cabine d'avion 10. Le membre d'équipage 24 pourra ainsi fixer temporairement le rideau d'isolation 21 en le plaquant suivant la flèche F7 contre la paroi 38 de la cabine d'avion 10. Une telle solution présente toutefois l'inconvénient de présenter un impact visuel toujours présent dans la cabine d'avion 10 lorsque le rideau d'isolation 21 n'est pas déployé.

Le rideau d'isolation 21 est réalisé de préférence dans un matériau flexible, notamment un matériau textile. De préférence, le rideau 21 est réalisé dans un matériau occultant. Le matériau textile pourra être uniformément plissé afin de minimiser les plis disgracieux du rideau 21 dus au rangement. Le cas échéant, le rideau 21 pourra être réalisé dans un matériau rembourré. Une telle configuration permet de mieux isoler du bruit et de la lumière et améliorer ainsi le confort des membres de l'équipage. En variante, le rideau 21 pourra être réalisé en cuir ou en simili cuir.

Comme cela est illustré par la figure 7, le rideau 21 pourra comporter un marquage 40 sous forme d'un texte et/ou d'un symbole indiquant que le rideau 21 délimite un espace clos de repos 22 réservé aux membres d'équipage. Cela permet de clarifier son utilité auprès des passagers.

Le rideau 21 est également personnalisable aux couleurs de la compagnie aérienne.

Afin d'effectuer l'installation du rideau d'isolation 21, ce dernier est accroché dans un premier temps au niveau du compartiment à bagages 18. A cet effet, le membre d'équipage 24 pourra disposer la barre lestée 23 à l'intérieur du compartiment à bagages 18 avant de refermer le tiroir 19 pour la maintenir en position. Dans un autre mode de réalisation, il pourra utiliser les crochets fixes ou mobiles 25 du compartiment à bagages 18 destinés à coopérer avec des zones d'accrochage 27 du rideau d'isolation 21.

Ensuite, le membre d'équipage 24 fixe les côtés et/ou une partie inférieure du rideau d'isolation 21 sur l'extension rapportée 34 et/ou sur la paroi 38 de la cabine d'avion 10 via le dispositif secondaire de maintien 31.

Pour démonter le rideau d'isolation 21, le membre d'équipage 24 pourra tirer sur le rideau d'isolation 21 afin de le désolidariser du dispositif secondaire de maintien 31. Il pourra ensuite retirer le rideau d'isolation 21 du compartiment à bagages 18 en décrochant les zones d'accrochage 27 par rapport aux crochets fixes ou mobiles 25, ou en sortant la barre lestée 23 du compartiment à bagages 18 après avoir ouvert le tiroir 19. Le rideau d'isolation 21 pourra ensuite être plié pour être stocké.

Lorsque le rideau 21 est à l'état stocké, ce dernier ainsi que le dispositif secondaire de maintien 31 se trouvent de préférence complètement à l'intérieur du volume interne du compartiment 18. Il n'y a alors aucune modification visible au sein de la cabine d'avion 10, de sorte que l'invention n'affecte pas l'aspect esthétique général de la cabine d'avion 10. En outre, aucun élément externe, tel qu'un rail, n'est susceptible de générer des problèmes de sécurité lors d'un crash.

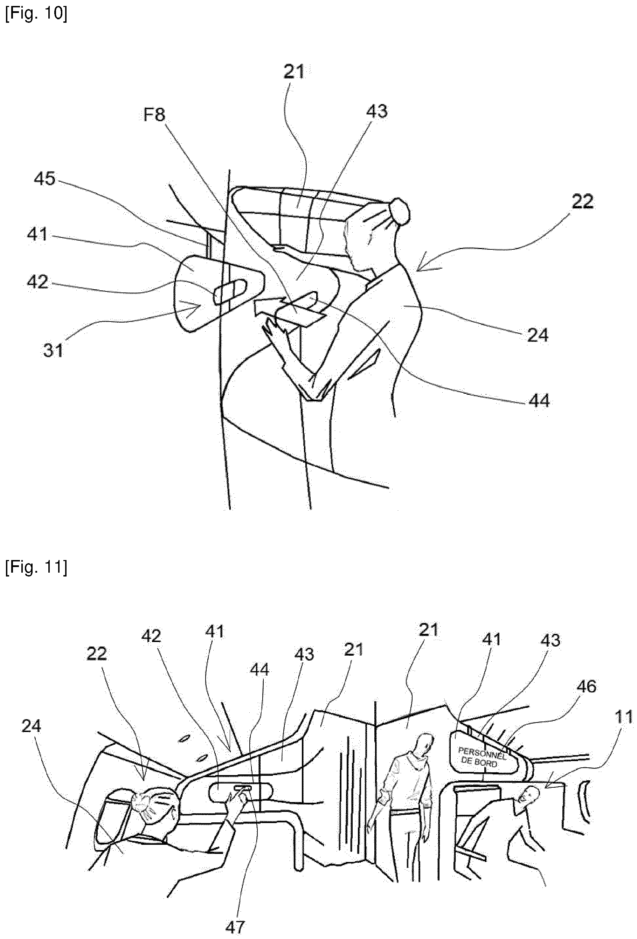

Dans le mode de réalisation de la figure 8, le dispositif secondaire de maintien amovible 31 comporte un séparateur de cabine 41. Comme on peut le voir sur les figures 9 et 10, le séparateur de cabine 41 est muni d'au moins un moyen d'accroche 42 à au moins un rabat latéral 43 du rideau d'isolation 21. Le séparateur de cabine 41 est fixé sous le compartiment à bagages 18. Le séparateur de cabine 41 pourra être fixé au compartiment à bagages 18 au moyen de bras de fixation 45. Le séparateur de cabine 42 s'étend transversalement entre l'espace réservé aux membres d'équipage et une unité de siège 11 adjacente. Le moyen d'accroche 42 pourra comporter une portion en saillie destinée à venir s'insérer à l'intérieur d'une ouverture 44 ménagée dans le rabat 43 du rideau d'isolation 21, tel que cela est montré sur la figure 10. En variante, le moyen d'accroche 42 comporte des attaches auto-agrippantes ou un système à aimants.

Ainsi, depuis l'intérieur de l'espace clos 22 créé par le rideau d'isolation 21, le membre d'équipage 24 pourra fixer, suivant la flèche F8, le ou les rabats latéraux 43 sur le séparateur de cabine 41. Les rabats 43 sont plus solides et plus larges que le reste du rideau d'isolation 21 afin de permettre un bon maintien au niveau du séparateur de cabine 41. Les rabats latéraux 43 s'étendent perpendiculairement au plan dans lequel s'étend la majorité du rideau d'isolation 21 lorsque ce dernier est mis en place. Des ajouts de textiles rembourrés le long des bordures pourront permettre de limiter les incursions lumineuses et sonores en comblant les écarts d'espace entre le rideau d'isolation 21, le siège, et les parois de la cabine d'avion 10.

Comme on peut le voir sur la figure 11, afin de clarifier l'utilité d'une telle structure au sein d'une cabine de type classe affaires, le séparateur de cabine 41 pourra être équipé d'un système d'affichage lumineux 46, notamment à diodes électroluminescente (DEL).

Une fois le rideau d'isolation 21 installé, un membre d'équipage 24 pourra appuyer sur un interrupteur 47 depuis l'intérieur de l'espace clos 22 délimité par le rideau d'isolation 21 pour activer l'affichage lumineux. Un texte mentionnant "Equipage au repos" pourra par exemple s'afficher pour indiquer l'utilité de la structure auprès des passagers. Ainsi, le séparateur de cabine 41 comporte une face interne tournée vers l'intérieur de l'espace clos 22 munie de l'interrupteur 47 d'activation du système d'affichage lumineux 46 ainsi que du moyen d'accroche 42; et une face externe tournée vers l'extérieur de l'espace clos 22 munie des diodes électroluminescentes.

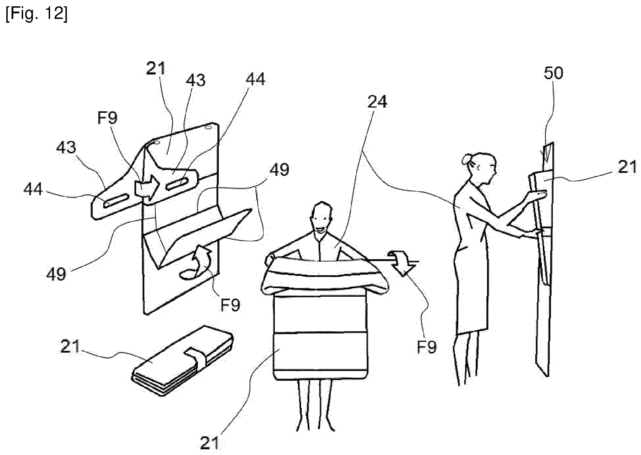

Comme cela est illustré par la figure 12, pour assurer un rangement soigné et éviter les plis du rideau 21, des coutures thermocollées 49 constituant des guides de pliage sont réalisées dans le textile rembourré du rideau. Un membre d'équipage 24 pourra effectuer, de façon intuitive, le pliage du rideau d'isolation 21 suivant ces guides de pliage 49 selon les flèches de pliage F9. Le rideau d'isolation 21 plié pourra ensuite être rangé à l'intérieur d'un espace de stockage dédié 50.

Par souci de discrétion et d'intimité, ce système à rideau est de préférence placé en bout de rangée à l'arrière de la cabine d'avion 10.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association, dans la mesure où elles entrent dans le cadre des revendications annexées.

## Revendications

1. Ensemble pour une cabine d'aéronef (10) comportant:
- au moins une unité de siège (11) comportant un siège (12) et une coque d'intimité (13) s'étendant au moins en partie autour du siège (12),
- un compartiment à bagages (18), et
- au moins un rideau d'isolation (21),
- le rideau d'isolation (21) est un rideau d'isolation rapporté par rapport au compartiment à bagages (18),
- un dispositif de maintien amovible (20) du rideau d'isolation (21) est configuré de façon à maintenir le rideau d'isolation (21) dans un état suspendu au compartiment à bagages (18) de manière à délimiter au moins en partie un espace clos de repos (22) autour de l'unité de siège (11) et à autoriser une désolidarisation manuelle du rideau d'isolation (21) par rapport au compartiment à bagages (18) sans l'aide d'outil,
**caractérisé en ce que**
- le dispositif de maintien amovible (20) du rideau d'isolation (21) comporte une barre lestée (23) s'étendant au moins en partie suivant un bord supérieur (36) du rideau d'isolation (21), ladite barre lestée (23) étant destinée à être positionnée à l'intérieur d'un volume interne du compartiment bagages (18) délimité par un tiroir (19), de sorte que lorsque le tiroir (19) est en position fermée, le rideau d'isolation (21) est pincé entre le tiroir (19) et une partie fixe du compartiment à bagages (18) de manière à être maintenu suspendu au compartiment à bagages Z (18).

2. Ensemble selon la revendication 1, **caractérisé en ce qu'**au moins un dispositif secondaire de maintien amovible (31) du rideau d'isolation (21) est destiné à positionner et fixer une portion du rideau d'isolation (21) en contre-bas du compartiment à bagages (18).

3. Ensemble selon la revendication 2, **caractérisé en ce que** le dispositif secondaire de maintien amovible (31) comporte des aimants (32) destinés à coopérer avec des éléments métalliques ou magnétiques intégrés dans le rideau d'isolation (21).

4. Ensemble selon la revendication 2, **caractérisé en ce que** le dispositif secondaire de maintien amovible (31) comporte des attaches auto-agrippantes (33) destinées à coopérer avec des attaches auto-agrippantes de forme correspondante ménagées dans le rideau d'isolation (21).

5. Ensemble selon la revendication 2, **caractérisé en ce que** le dispositif secondaire de maintien amovible (31) comporte un séparateur de cabine (41) muni d'au moins un moyen d'accroche (42) à au moins un rabat latéral (43) du rideau d'isolation (21).

6. Ensemble selon la revendication 5, **caractérisé en ce que** le séparateur de cabine (41) est équipé d'un système d'affichage lumineux (46), notamment à diodes électroluminescente (DEL).

## Patentansprüche

1. Anordnung für eine Flugzeugkabine (10), mit:
- mindestens einer Sitzeinheit (11) mit einem Sitz (12) und einer sich zumindest teilweise um den Sitz (12) erstreckenden Sichtschutzschale (13),
- einem Gepäckraum (18), und
- mindestens ein Isoliervorhang (21),
- wobei es sich bei dem Isoliervorhang (21) um einen angesetzten Isoliervorhang relativ zum Gepäckraum (18) handelt,
- wobei eine abnehmbare Haltevorrichtung (20) für den Isoliervorhang (21) so konfiguriert ist, dass sie den Isoliervorhang (21) im hängenden Zustand vom Gepäckraum (18) hält, um einen geschlossenen Ruheraum (22) um die Sitzeinheit (11) zumindest teilweise abzugrenzen und die manuelle Abnahme des Isoliervorhangs (21) vom Gepäckraum (18) ohne Werkzeug zu ermöglichen,
**dadurch gekennzeichnet, dass**
- die abnehmbare Haltevorrichtung (20) für den Isoliervorhang (21) eine beschwerte, sich zumindest teilweise entlang einer Oberkante (36) des Isoliervorhangs (21) erstreckende Stange (23) umfasst, wobei die beschwerte Stange (23) so angeordnet ist, dass sie innerhalb eines durch eine Schublade (19) begrenzten Innenraums des Gepäckraums (18) positioniert wird, so dass bei der geschlossenen Position der Schublade (19) der Isoliervorhang (21) zwischen der Schublade (19) und einem festen Teil des Gepäckraums (18) eingeklemmt wird und somit vom Gepäckraum (18) herabhängt.

2. Anordnung nach Anspruch 1, **dadurch gekennzeichnet, dass** mindestens eine sekundäre abnehmbare Haltevorrichtung (31) für den Isoliervorhang (21) vorgesehen ist, um einen Teil des Isoliervorhangs (21) unterhalb des Gepäckraums (18) zu positionieren und zu befestigen.

3. Anordnung nach Anspruch 2, **dadurch gekennzeichnet, dass** die sekundäre abnehmbare Haltevorrichtung (31) Magnete (32) zur Zusammenarbeit mit metallischen oder magnetischen in den Isoliervorhang (21) integrierten Elementen umfasst.

4. Anordnung nach Anspruch 2, **dadurch gekennzeichnet, dass** die sekundäre abnehmbare Haltevorrichtung (31) Klettverbindungselemente (33) umfasst, die mit entsprechend geformten Klettverbindungselementen im Isoliervorhang (21) zusammenwirken.

5. Anordnung nach Anspruch 2, **dadurch gekennzeichnet, dass** die sekundäre abnehmbare Haltevorrichtung (31) eine Kabinentrenneinrichtung (41) umfasst, der mit mindestens einem Festhakenmittel (42) für mindestens eine Seitenklappe (43) des Isoliervorhangs (21) versehen ist.

6. Anordnung nach Anspruch 5, **dadurch gekennzeichnet, dass** die Kabinentrenneinrichtung (41) mit einem Lichtanzeigesystem (46), insbesondere mit Leuchtdioden (LEDs), ausgestattet ist.

## Claims

1. An assembly for an aircraft cabin (10) comprising:
- at least one seat unit (11) comprising a seat (12) and a privacy shell (13) extending at least partially around the seat (12),
- a luggage compartment (18), and
- at least one insulation curtain (21),
- the insulation curtain (21) being a separated insulation curtain relative to the luggage compartment (18),
- a removable holding device (20) for the insulation curtain (21) being configured to hold the insulation curtain (21) in a suspended state from the luggage compartment (18) so as to delimit at least partially an enclosed resting space (22) around the seat unit (11) and to allow manual detachment of the insulation curtain (21) from the luggage compartment (18) without any tools,
**characterized in that**
- the removable holding device (20) for the insulation curtain (21) comprises a weighted bar (23) extending at least partly along an upper edge (36) of the insulation curtain (21), said weighted bar (23) being provided so as to be positioned inside an internal volume of the luggage compartment (18) delimited by a drawer (19), so that when the drawer (19) is in the closed position, the insulation curtain (21) is pinched between the drawer (19) and a fixed part of the luggage compartment (18) so as to be hold in a suspended state from the luggage compartment (18).

2. The assembly according to claim 1, **characterized in that** at least one secondary removable holding device (31) for the insulation curtain (21) is provided for positioning and fixing a portion of the insulation curtain (21) below the luggage compartment (18).

3. The assembly according to claim 2, **characterized in that** the secondary removable holding device (31) comprises magnets (32) for cooperating with metallic or magnetic elements integrated in the insulation curtain (21).

4. The assembly according to claim 2, **characterized in that** the secondary removable holding device (31) comprises self-gripping fasteners (33) for cooperating with correspondingly shaped self-gripping fasteners in the insulation curtain (21).

5. The assembly according to claim 2, **characterized in that** the secondary removable holding device (31) comprises a cabin separator (41) provided with at least one hooking means (42) for at least one side flap (43) of the insulation curtain (21).

6. The assembly according to claim 5, **characterized in that** the cabin separator (41) is equipped with a light display system (46), in particular with light-emitting diodes (LEDs).
